# EUROPÄISCHE PATENTANMELDUNG

(11) **EP 1 482 392 A2**
(43) Veröffentlichungstag der Anmeldung: **01.12.2004**
(21) Anmeldenummer: 04002011.7
(22) Anmeldetag: 30.01.2004
(51) Int. Cl.: G06F 1/00

(54) **Prozessor mit einem externen Speicher**

(30) Priorität: 18.02.2003 DE 10306844
(71) Anmelder: Micronas GmbH, 79108 Freiburg (DE)
(72) Erfinder: Von Janecek, Hubertus, 22457 Hamburg (DE); Möller, Peter, 79100 Freiburg (DE)
(74) Vertreter: Patentanwälte Westphal, Mussgnug & Partner

(57) **Zusammenfassung**

Die Erfindung bezieht sich auf einen Prozessor (P) mit einem Prozessorkern (PC) zum Verarbeiten von Daten (d), einer Programmierungs- bzw. Prozessorschnittstelle (PIF) zum Übertragen der Daten (d) zwischen dem Prozessorkern (PC) und einer externen Einrichtung und einer Speicherschnittstelle (MIF) zum Übertragen der Daten (d) zwischen dem Prozessor (P) und einem dem Prozessor zugeordneten externen Speicher (M). Um bei der Speicherung der Daten (d) in dem externen Speicher (M) eine vergleichbare Sicherheit zu Daten (d) zu bieten, welche in einem prozessorinternen Speicher gespeichert werden, wird vorgeschlagen, eine Codiereinrichtung (EC/DC) zum Codieren und/oder Decodieren der über die Speicherschnittstelle (MIF) zu übertragenden Daten (d) als codierte Daten (cd) innerhalb des Prozessors (P) auszubilden.

## Beschreibung

Die Erfindung bezieht sich auf einen Prozessor mit den oberbegrifflichen Merkmalen des Patentanspruchs 1 bzw. ein Verfahren zum Speichern von Daten eines Prozessors in einem externen Speicher.

Prozessoren für diverse Anwendungen, insbesondere den Einsatz in einem Computer, weisen einen Prozessorkern auf, in dem eine Datenverarbeitung durchgeführt wird. Die Datenverarbeitung ist dabei im weitesten Sinne zu sehen und betrifft Weiterleitung oder Verarbeitung von Nutzdaten, entsprechend hard- oder softwaregestützten Programmen sowie die Zwischenspeicherung derartiger Daten. Unter Daten sind dabei nicht nur Nutzdaten sondern auch Adressdaten oder Nutzdaten- und Adressdaten-Zusatzinformationen zu verstehen. Daten im weiteren Sinne sind auch die Daten eines Programmcodes zum Steuern des Prozessorkerns.

Zum zeitweiligen oder dauerhaften Speichern derartiger Daten verfügt der Prozessor über Speicherraum. Der Speicherraum kann dabei als interner Speicher innerhalb des Prozessors oder über eine Speicherschnittstelle hinweg als externer Speicher ausgebildet sein. Vorteile eines internen Speichers sind insbesondere darin zu sehen, dass der interne Speicher einen schnellen Speicherzugriff über einen internen Prozessorbus ermöglicht und die Daten des internen Speichers über eine Externschnittstelle zum Programmieren des Prozessors nicht direkt zugreifbar sind. Nachteilhaft an einem internen Speicher ist jedoch der bauliche Aufwand, wodurch ein Prozessor mit einem großen internen Speicher teuer ist. Vorteilhaft bei einem externen Speicher ist, dass dieser kostengünstig und mit theoretisch beliebiger Speichergröße bereitstellbar ist. Nachteilhaft ist jedoch, dass die Daten auf einem solchen externen Speicher nur bedingt sicher sind. Während die Daten eines internen Speichers von außen nicht zugreifbar sind, besteht bei einem externen Speicher die Möglichkeit, über die Speicheranschlüsse, gegebenenfalls nach Herauslöten des Speichers aus einer Computerplatine, die Daten auszulesen.

Die Aufgabe der Erfindung besteht darin, einen Prozessor mit einem externen Speicher bzw. ein Verfahren zum Speichern von Daten eines Prozessors in einem externen Speicher derart zu verbessern, dass die Daten in dem Speicher bei unberechtigtem externen Zugriff nicht verwertbar ausgelesen werden können.

Diese Aufgabe wird durch einen Prozessor mit den Merkmalen des Patentanspruchs 1 bzw. ein Verfahren mit den Merkmalen des Patentanspruchs 12 gelöst. Komponenten mit eigenständiger Bedeutung sind dabei eine Prozessor-Speicherschnittstelle und ein externer Speicher gemäß den Merkmalen der Patentansprüche 10 und 11.

Ein üblicher Prozessor weist dabei einen Prozessorkern zum Verarbeiten von Daten, eine Prozessorschnittstelle zum Übertragen der Daten zwischen dem Prozessorkern und einer externen Einrichtung und eine Speicherschnittstelle zum Übertragen der Daten zwischen dem Prozessor und einem externen Speicher auf. Daten sind dabei jegliche Formen von Datenwerten, insbesondere Nutzdaten, Datenwerte eines Programmcodes zum Steuern des Prozessorkerns, des Prozessors oder weiterer Einrichtungen und Adressen zum Adressieren von Komponenten innerhalb und außerhalb des Prozessors.

Die Prozessorschnittstelle dient als allgemeine Ein- und Ausgangsschnittstelle beispielsweise zum Übertragen eines Programmcodes zum Steuern des Prozessors, fungiert somit als Programmierschnittstelle. Die Prozessorschnittstelle kann alternativ oder zusätzlich auch zum bidirektionalen Übertragen von Nutzdaten und Adressdaten ausgebildet sein, welche von dem Prozessor verarbeitet oder an weitere Einrichtungen weitergeleitet werden.

Die Speicherschnittstelle dient zum Übertragen von temporär oder dauerhaft zu speichernden Daten zwischen dem Prozessor und einem oder mehreren externen Speichern, wobei auch hier unter den Daten verschiedenartigste Daten zu verstehen sind, insbesondere Nutzdaten, Adressdaten und Programmcodes. Ein externer Speicher kann dabei zusätzlich oder alternativ zum internen Speicher des Prozessors bereitgestellt sein.

Um ein unberechtigtes Auswerten und Verwerten des externen Speicherinhalts zu verhindern, weist der Prozessor außerdem eine Codiereinrichtung zum Codieren und/oder Decodieren der über die Speicherschnittstelle zu übertragenden Daten zur Speicherung als codierte Daten im Speicher auf. Im externen Speicher werden somit codierte Daten abgespeichert, welche für einen unberechtigt Zugreifenden wertlos sind. Der Code zum Codieren und Decodieren der Daten befindet sich im Prozessor, ist somit für externe Zugriffe nicht erreichbar, wie bei ansonsten intern im Prozessor gespeicherte Daten. Dabei ist anzumerken, dass die Verschlüsselung in der Prozessor-Speicherschnittstelle erfolgt.

Bei regulären Zugriffen auf den Prozessor über die Prozessorschnittstelle ist aus Sicht der Prozessorschnittstelle die Speicherschnittstelle entweder unsichtbar oder nicht erkennbar, dass über die Prozessorschnittstelle codierte Daten übertragen werden.

Somit kann für einen Prozessor ein kostengünstiger externer Speicher bereitgestellt werden, welcher letztendlich durch die Codierung mit einem im Prozessor hinterlegten Code eine vergleichbare Sicherheit bietet wie ein intern im Prozessor angeordneter Speicher.

Verfahrensgemäß werden demnach die vom Prozessor zu speichernden Daten codiert und als codierte Daten über die Speicherschnittstelle zum Speicher übertragen bzw. vom externen Speicher über die Speicherschnittstelle zum Prozessor zurückübertragen und im Prozessor wieder decodiert.

Vorteilhafte Ausgestaltungen sind Gegenstand abhängiger Ansprüche.

Vorteilhafterweise ist die Codiereinrichtung als fest verbundener baulicher Bestandteil des Prozessors ausgebildet. Dies verhindert ein Heraustrennen der Codiereinrichtung aus einer Schaltungsanordnung, um durch einen externen Zugriff den oder die in der Codiereinrichtung abgespeicherten Codes auszulesen.

Die Prozessorschnittstelle ist vorteilhafterweise über den Prozessorkern mit der Speicherschnittstelle verbunden, um aus Sicht der Prozessorschnittstelle ohne direkte Zugriffsmöglichkeit auf die Codiereinrichtung eine Codierung von zu speichernden Daten oder eine Decodierung von aus dem Speicher abzurufenden Daten zu ermöglichen. Möglich ist aber auch eine Ausführungsform, bei der die Prozessorschnittstelle zusätzlich direkt mit der Speicherschnittstelle verbunden ist, um die unmittelbare Übertragung von nicht sensiblen Daten einer externen Einrichtung über die Eigangsschnittstelle und die Speicherschnittstelle in den Speicher zu ermöglichen. Zweckmäßigerweise werden für diesen Zweck in dem Speicher nur bestimmte Adressbereiche der Speicherplätze freigegeben, so dass ein Zugriff auf geschützte Speicherplätze verhindert wird. Sollte über diesen Weg der direkten Verbindung von Prozessorschnittstelle und Speicherschnittstelle trotzdem von einer externen Einrichtung ein Zugriff auf nicht zugelassene Speicherplätze erfolgen, so können aus diesen Speicherplätzen nur codierte Daten ausgelesen werden, wobei jedoch ein Zugriff auf den Code in der Codiereinrichtung nicht möglich ist, da die Codiereinrichtung zweckmäßigerweise nur von dem Prozessorkern ansteuerbar ist.

Vorteilhafterweise weist der Prozessor eine Leiteinrichtung zum wahlweise Leiten der zwischen dem Prozessor und dem Speicher zu übertragenden Daten als codierte oder uncodierte Daten auf. Dies ermöglicht, unsensible Daten direkt im Speicher zu speichern, ohne zuvor eine Codierung bzw. nach dem Abrufen aus dem Speicher eine Decodierung vornehmen zu müssen. Da Codierung und Decodierung zeit- und energieaufwändige Vorgänge sind, ist dies eine zweckmäßige Option einer bevorzugten Ausführungsform. Die Leiteinrichtung kann dabei in verschiedener Art und Weise ausgebildet sein. Einerseits können die Daten durch die Codiereinrichtung ohne Codierung bzw. Decodierung hindurchgeleitet werden, andererseits ist auch eine Schalteinrichtung möglich, welche die Daten wahlweise der Codiereinrichtung zuführt oder die Daten direkt zwischen Prozessorkern und Schnittstelle und an der Codiereinrichtung vorbei leitet.

Zur Erhöhung der Sicherheit wird die Codiereinrichtung vorteilhafterweise mit verschiedenen Codes ausgestattet, wobei fallweise verschieden auswählbare Codes besonders bevorzugt werden. Dies ermöglicht, eine Abstufung der Codierung vorzunehmen, so dass hochsensible Daten wie Passwörter und Identifikationsinformationen mit aufwändigen Codes codiert werden, was einen entsprechenden Zeit-, Energie- und Rechenaufwand erforderlich macht, während weniger sensible Daten mit einem niederwertigeren Code codiert werden. Ein optionaler "Leercode" entspricht dabei einer Weiterleitung der Daten als uncodierte Daten.

Eine entsprechende Codeauswahl kann dabei auf verschiedene Art und Weise getroffen werden. Möglich ist die Auswahl des zu verwendenden Codes abhängig von der Art der Daten oder abhängig von Datenzusatzinformationen vorzunehmen. Als verschiedenartige Daten sind beispielsweise Identifikationsinformationen, Passwörter, Steueralgorithmen und einfache Textdokumente anzusehen. Zusatzinformationen können dabei Kennungen von Passwörtern oder Kennungen von Textdateien sein. Möglich ist aber auch eine Auswahl der Codes abhängig von dem ausgewählten Speicherbereich, insbesondere wenn der Speicher in verschiedene Speicherbereiche unterteilt ist, bei denen die zugeordneten Speicheradressen jeweils verschiedenen Codes bzw. Sicherheitsstufen zugeordnet sind.

Ein Ausführungsbeispiel wird nachfolgend anhand der Zeichnung näher erläutert. Es zeigen:
- Fig. 1: mit wenigen Darstellungselementen einen Grundaufbau einer Anordnung aus Prozessor und externem Speicher und
- Fig. 2: ein bevorzugtes Ausführungsbeispiel eines Prozessors mit einem externen Speicher und einer Codiereinrichtung zum Codieren von Daten, die zwischen dem Prozessor und dem externen Speicher zu übertragen sind.

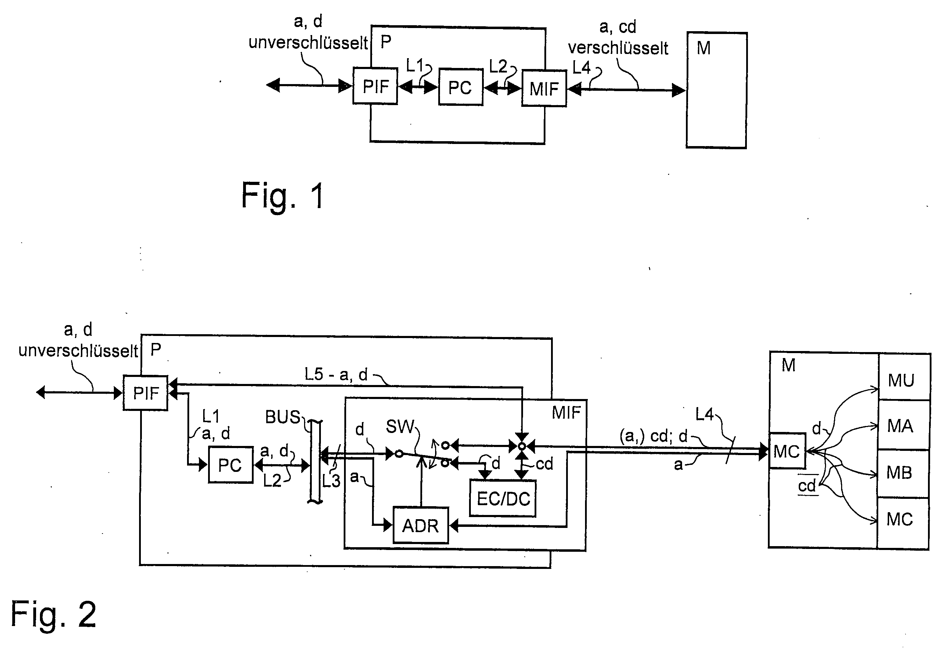

Wie dies aus Fig. 1 ersichtlich ist, werden einem Prozessor P über eine Prozessorschnittstelle PIF unverschlüsselte Daten d, wozu im Zweifelsfall auch Adressen a zählen, von bzw. zu einer externen Einrichtung übermittelt. Bei der externen Einrichtung kann es sich um eine Einrichtung auf der gleichen Leiterplatte handeln, auf der auch der Prozessor P angeordnet ist, es kann sich aber auch um eine baulich gänzlich getrennte Einrichtung handeln. Zusätzlich oder alternativ kann es sich bei den Daten d auch um einen Programmcode handeln, wenn die Prozessorschnittstelle PIF als eine sogenannte Programmierschnittstelle ausgebildet ist.

Von der Prozessorschnittstelle PIF aus werden die Daten d, a über eine erste Leitung L1 zu einem Prozessorkern PC geführt. Der Prozessorkern PC dient zum Aufarbeiten, Weiterleiten und/oder Verarbeiten der zugeführten Daten d, a.

Für den Fall, dass der Prozessorkern PC derart empfangene und/oder verarbeitete Daten d zwischenspeichern muss, werden die Daten d über eine zweite Leitung einer Speicherschnittstelle MIF zugeführt. Die Speicherschnittstelle MIF dient zum Übermitteln und gegebenenfalls dazu geeigneten Aufbereiten der Daten über eine weitere Leitung L4 an einen externen Speicher M. Anstelle der Übertragung über eine feste Leitung L4 kann auch eine Übertragung über eine Infrarotverbindung oder eine Funkschnittstelle und dergleichen erfolgen. Die Übertragung der Daten d des Prozessorkerns PC erfolgt dabei in einer codierten Form als verschlüsselte bzw. codierte Daten cd. Die Verschlüsselung wird insbesondere in der Speicherschnittstelle MIF oder einer Einrichtung auf der Strecke vom Prozessorkern PC zur Speicherschnittstelle MIF hin durchgeführt, d.h. innerhalb des Prozessors P.

Im Speicher M werden somit vorzugsweise codierte Daten cd abgespeichert. Nach deren Abruf und Rückübertragung über die vierte Leitung L4 zu der Speicherschnittstelle MIF werden diese codierten Daten in der Speicherschnittstelle MIF oder in einer geeigneten Einrichtung auf der Strecke bis zum Prozessorkern PC hin decodiert, um dem Prozessorkern PC für die Verarbeitung oder Weiterleitung als unverschlüsselte bzw. nicht codierte Daten d wieder zur Verfügung zu stehen.

Wie dies aus Fig. 2 ersichtlich ist, kann eine bevorzugte Ausführungsform eine Vielzahl von Einzelkomponenten und Leiterbahnen vorsehen, welche eine flexiblere Handhabung von unverschlüsselten bzw. uncodierten Daten d, a bei der Weiterleitung zum Speicher M ermöglichen. Darstellt sind dabei die Leitungen als einfache Striche oder zueinander parallel geführte Leitungen, über welche Daten d bzw. codierte Daten cd und gegebenenfalls Adressen a übertragen werden. Diesbezüglich ist eine Vielzahl von Alternativen umsetzbar, beispielsweise Ausführungsformen, bei denen die Leitungen durch Busse mit einer Vielzahl von Einzelleitungen ausgebildet werden. Möglich ist die gleichzeitige Übertragung von Adressen a und Daten d über parallel innerhalb eines Busses geführte Einzelleitungen. Möglich ist aber auch die abwechselnde Übertragung von Daten in Form von Adressen a, mit welchen Adressbereiche MU, MA, MB, MC eines Speichers M oder einer sonstigen Einrichtung adressiert werden, welche anschließend Daten d in Form von Nutzdaten empfangen oder senden soll.

Die unverschlüsselten bzw. uncodierten Daten d werden dem Prozessor P über eine Prozessorschnittstelle PIF zugeführt. Von der Prozessorschnittstelle PIF werden die Daten d und auch Adressdaten a über eine erste Leitung L1 oder einem entsprechenden Bus dem Prozessorkern PC zur weiteren Verarbeitung oder Weiterleitung zugeführt. Der Prozessorkern PC leitet die Daten d verarbeitet oder unverarbeitet über eine zweite Leitung L2, einen prozessorinternen Bus BUS und eine dritte Leitung L3, insbesondere mehradrige Leitung, zu der Speicherschnittstelle MIF. In der Speicherschnittstelle MIF werden die Daten d wiederum zu codierten Daten cd umgesetzt und dann über eine vierte Leitung L4 zu dem Speicher M übertragen, in welchem die codierten Daten cd in einem dafür bereitgestellten Speicherabschnitt MA, MB oder MC abgespeichert werden.

Bei der dargestellten bevorzugten Ausführungsform werden die Daten d des Prozessorkerns PC in der Speicherschnittstelle MIF einer Leiteinrichtung SW in Form eines einfachen Schalters SW zugeführt. Als Schalter SW können beliebige Schalterformen, insbesondere auf Basis von Transistoren und dergleichen, verwendet werden. Der Schalter SW legt die empfangenen Daten d wahlweise entweder der vierten Leitung L4 an, welche die Daten uncodiert bzw. unverschlüsselt zum Speicher M leitet. Für unverschlüsselte Daten ist in dem Speicher M ein Speicherbereich MU bereitgestellt, welcher auch durch einen unberechtigten Eingriff in Klarschrift ausgelesen werden könnte, wie dies für sich bekannt ist. In der zweiten Schaltstellung leitet der Schalter SW die empfangenen Daten d einer Codiereinrichtung EC/DC zu, welche die Daten d codiert und als codierte Daten cd ausgibt. Die codierten Daten cd werden ebenfalls der vierten Leitung L4 angelegt, welche die codierten Daten cd zum Speicher M überträgt.

Der dargestellte Speicher M weist eingangsseitig eine Speichersteuerung MC auf, zu welcher die Daten,d oder codierten Daten cd und gegebenenfalls Adressdaten a übertragen werden. Die Speichersteuerung MC verteilt die empfangenen Daten d, cd auf verschiedene Speicherabschnitte MU bzw. MA, MB, MC, wobei uncodierte Daten d in den ersten Speicherabschnitt MU geleitet und dort abgespeichert werden. Die weiteren Speicherabschnitte MA, MB, MC dienen zum Abspeichern codierter Daten cd. Dabei werden die codierten Daten cd vorzugsweise nach der Codelänge oder Codierungsart sortiert und den verschiedenen der weiteren Speicherabschnitte MA, MB, MC entsprechend zugeordnet zugeführt. Bei dem dargestellten Ausführungsbeispiel befinden sich somit uncodierte Daten d in dem ersten Speicherabschnitt MU, gering codierte Daten cd in dem ersten weiteren Speicherabschnitt MA, durchschnittlich stark codierte Daten cd in dem mittleren weiteren Speicherabschnitt und stark codierte Daten cd, insbesondere Identifikationsangaben und Passwörter, in dem vierten Speicherabschnitt MC.

Anstelle die uncodierten und codierten Daten d, cd in verschiedenen Speicherabschnitten des Speichers M abzuspeichern, ist es natürlich auch auf andere Art und Weise möglich, die codierten Daten cd als solche und mit Blick auf den verwendeten Code zu kennzeichnen. Beispielsweise kann bei der Übertragung von Daten d und codierten Daten cd über die Schnittstelle auch zusammen mit diesen ein Merker (flag) übertragen werden.

Während vorstehend die Übertragung von Daten d von dem Prozessorkern PC aus über die Speicherschnittstelle MIF in den Speicher M beschrieben wurde, werden umgekehrt Daten d und codierte Daten cd aus dem Speicher M über die Speicherschnittstelle MIF zum Prozessorkern PC übertragen. Codierte Daten cd werden dabei über die Codiereinrichtung EC/DC geführt und in dieser decodiert.

Zur Auswahl des zu verwendenden Codes in der Codiereinrichtung EC/DC können Zusatzinformationsdaten, insbesondere die Adressen oder die Funktionen der Daten, beispielsweise eine Funktion als Identifikationscode oder Passwort, verwendet werden.

Bei dem dargestellten Ausführungsbeispiel soll die Speicheradresse oder die Adresse a einer zugreifenden Einrichtung als Kriterium herangezogen werden. Eine Codierungsbestimmungseinrichtung ADR, vorliegend in Form einer Adressanalyseeinrichtung ADR, empfängt von dem Prozessorkern PC und/oder von der Speichersteuerung MC des Speichers M ein Adresssignal bzw. Adressdaten a zu nachfolgend oder parallel zu übertragenden Nutzdaten d, cd. Abhängig von der Adressauswertung wird somit ein in der Codiereinrichtung EC/DC verfügbarer Code zum Codieren bzw. zum Decodieren der zwischen dem Prozessor P und dem Speicher M zu übertragenden Daten angesteuert. Die in der Codiereinrichtung EC/DC verfügbaren Codes werden dabei für verschieden hohe Codieranforderungen verwendet, so dass einfach codierbare Daten mit einer nur geringen Sicherheitsanforderung nur mit einem kurzen Code codiert werden, welcher nur einen geringen Rechenaufwand und Leistungsaufwand benötigt. Sensible Daten, beispielsweise Programmquelltexte für den Betrieb des Prozessorkerns, Identifikationsangaben und Passwörter, werden hingegen mit höherwertigen Codes codiert, was allerdings zeit- und rechenaufwändiger ist und somit auch einen höheren Energieverbrauch verursacht. Entsprechendes gilt natürlich auch für die Decodierung codierter Daten, die aus dem Speicher M zum Prozessorkern PC zurückgesendet werden.

Die Codierungsbestimmungseinrichtung ADR betätigt außerdem den Schalter SW, mit welchem festgelegt wird, ob die uncodierten Daten d in uncodierter Form zum Speicher M oder in codierter Form durch die Codiereinrichtung EC/DC hindurch zum Speicher geführt werden. Selbiges gilt entsprechend für die Rückrichtung. Alternativ kann natürlich auch eine Codiereinrichtung EC/DC bereitgestellt werden, welche einen Leercode aufweist, bei dessen Auswahl die Daten d als uncodierte Daten d hindurchgeleitet werden.

Vorteilhafterweise weist das dargestellte Ausführungsbeispiel außerdem eine Direktzugriffsleitung als weitere, fünfte Leitung L5 auf, die direkt von der Prozessorschnittstelle PIF zu der Speicherschnittstelle MIF führt. Dies ermöglicht den direkten Zugriff von der Eingangs- bzw. Programmierschnittstelle PIF auf den Speicher M, indem die Daten über diese Direktverbindung auf der Direktleitung L5 und die Speicherschnittstelle MIF zu dem Speicher M bzw. dessen Speichersteuerung MC übertragen werden. Entsprechend ist auch ein Auslesen von Speicherinhalten aus dem Speicher M in umgekehrter Datenflussrichtung möglich. Auch hierbei werden unter den Daten d gegebenenfalls Adressdaten a zur Adressierung von miteinander kommunizierenden Einrichtungen oder Untereinrichtungen bzw. zur Adressierung von Speicherabschnitten in solchen Speichern verstanden.

Die einzelnen Einrichtungen und Leitungen können in üblicher Art und Weise modifiziert werden. Der Speicher M kann beispielsweise bestehen aus einem sogenannten flash-memory, einem statischen Direktzugriffsspeicher (SRAM: Static Random Access Memory), einem Direktzugriffsspeicher (DRAM: Direct RAM), einem SDRAM oder einem änderbaren programmierbaren Festwertspeicher (EPROM: Erasable Programmable Read-only-Memory). Der Prozessor P kann als ein üblicher Prozessor mit einer oder mehreren externen Schnittstellen, insbesondere Prozessorschnittstellen und Programmierschnittstellen, einer oder mehreren Speicherschnittstellen zu internen und externen Speichern M, einem oder mehreren internen Adress- und Datenbussen und zumindest einem Prozessorkern ausgebildet sein. Insbesondere können die Schnittstellen fester und von außen nicht zugreifbarer Bestandteil des Prozessors P, insbesondere auch des Prozessorkerns PC, sein.

Zum Betrieb einer solchen Anordnung wird ein Verfahren zum Speichern von Daten d eines Prozessors P in einem dem Prozessor P zugeordneten externen Speicher M bevorzugt, bei dem die Daten d, cd über die Speicherschnittstelle MIF des Prozessors P und eine entsprechende Schnittstelle zum Speicher M bzw. in umgekehrter Richtung übertragen werden. Dabei werden die Daten d, zumindest sicherheitsrelevante Daten d in der Codiereinrichtung EC/DC codiert bzw. decodiert.

## Patentansprüche

1. Prozessor (P) mit
- einem Prozessorkern (PC) zum Verarbeiten von Daten (d) und
- einer Speicherschnittstelle (MIF) zum Übertragen der Daten (d) zwischen dem Prozessor (P) und einem externen Speicher (M) ,
**gekennzeichnet durch**
- eine Codiereinrichtung (EC/DC) innerhalb oder an einer Schnittstelle des (P) zum Codieren und/oder Decodieren der über die Speicherschnittstelle (MIF) zu übertragenden bzw. übertragenen Daten (d) als codierte Daten(cd).

2. Prozessor (P) nach Anspruch 1, bei dem die Codiereinrichtung (EC/DC) als fest im Prozessor (P) integrierter baulicher Bestandteil des Prozessors (P) ausgebildet ist.

3. Prozessor (P) nach Anspruch 1 oder 2, bei dem eine Prozessorschnittstelle (PIF) als Ein- und/oder Ausgangsschnittstelle (PIF) über den Prozessorkern (PC) mit der Speicherschnittstelle (MIF) zum Übertragen codierter Daten (cd) von bzw. zum Speicher (M) verbunden ist (L1, L2, L3).

4. Prozessor (P) nach Anspruch 3, bei dem die Prozessorschnittstelle (PIF) zum Übertragen uncodierter Daten (d) von bzw. zum Speicher (M) zusätzlich direkt mit der Speicherschnittstelle (MIF) verbunden ist (L5).

5. Prozessor (P) nach einem vorstehenden Anspruch mit einer Leiteinrichtung (SW) zum wahlweisen Leiten der zwischen dem Prozessor (P) und dem Speicher (M) zu übertragenden Daten (d) als codierte Daten (cd) oder uncodierte Daten (d).

6. Prozessor (P) nach Anspruch 5, bei dem die Leiteinrichtung (SW) die Daten (d) zum Codieren bzw. Decodieren durch die Codiereinrichtung (EC/DC) hindurch oder uncodiert an der Codiereinrichtung vorbeileitet.

7. Prozessor (P) nach einem vorstehenden Anspruch, bei dem die Codiereinrichtung (EC/DC) zum Codieren der Daten (d) mit fallweise verschiedenen Codes ausgebildet ist.

8. Prozessor (P) nach einem vorstehenden Anspruch mit einer Codierungsbestimmungseinrichtung (ADR) zum Festlegen einer zum Codieren bzw. Decodieren der Daten (d, cd) zu verwendenden Codierung bzw. Decodierung, die abhängig von den Daten (d, cd) oder von Datenzusatzinformationen aus einer Vielzahl verwendbaren Codierungen bzw. Decodierungen ausgewählt wird.

9. Prozessor (P) nach Anspruch 8 mit einer Adressanalyseeinrichtung (ADR) als Codierungsbestimmungseinrichtung zum Analysieren einer den Daten (d, cd) zugeordneten Speicheradresse (MU, MA, MB, MC) und zum Bestimmen einer zum Codieren bzw. Decodieren der Daten (d, cd) zu verwendenden Codierung.

10. Prozessor-Speicherschnittstelle (MIF) zum Aufbauen einer Verbindung eines Prozessors (P) und eines externen Speichers (M) nach einem vorstehenden Anspruch.

11. Externer Speicher (M) zum Speichern von Daten (d, cd) eines Prozessors (P) nach einem vorstehenden Anspruch mit
- verschiedenen Speicherbereichen und/oder Adressbereichen (MU, MA, MB, MC) für unterschiedlich codierte Daten (d, cd) und
- einer Speichersteuereinrichtung (MC) zum Zuordnen empfangener Daten (d, cd) zu den verschiedenen Speicherbereichen und/oder Adressbereichen abhängig von der verwendeten Codierung.

12. Verfahren zum Speichern von Daten (d) eines Prozessors (P) in einem dem Prozessor (P) zugeordneten externen Speicher (M), bei dem
- die Daten (d, cd) über eine Speicherschnittstelle (MIF) des Prozessors (P) zwischen dem Prozessor (P) und dem Speicher (M) übertragen werden,
**dadurch gekennzeichnet,**
**dass** die Daten (d) mit einem innerhalb des Prozessors (P) befindlichen Code codiert bzw. decodiert werden und als codierte Daten (CD) über die Speicherschnittstelle (MIF) übertragen werden.
